# EUROPÄISCHE PATENTSCHRIFT

(11) **EP 3 677 550 B1**
(45) Veröffentlichungstag und Bekanntmachung des Hinweises auf die Patenterteilung: **10.11.2021**
(21) Anmeldenummer: 20159804.2
(22) Anmeldetag: 08.06.2016
(51) Int. Cl.: C01C 3/10

(54) **VERFAHREN ZUR HERSTELLUNG VON ALKALIMETALLCYANIDEN**
METHOD FOR PRODUCING ALKALI METAL CYANIDES
PROCÉDÉ DE FABRICATION DE CYANURES DE MÉTAL ALCALIN

(30) Priorität: 18.06.2015 DE 102015211233
(43) Veröffentlichungstag der Anmeldung: 08.07.2020
(62) Teilanmeldung aus: 16731818.7
(73) Patentinhaber: CyPlus GmbH, 64295 Darmstadt (DE)
(72) Erfinder: HENKEL, Jens, 98746 Meuselbach-Schwarzmühle (DE); RASSBACH, Jürgen, 99310 Arnstadt (DE); TRENKMANN, Klaus, 07407 Rudolstadt (DE); JAFELD, Markus, 50226 Frechen (DE); GLÖCKLER, Bernd, 63486 Bruchköbel (DE)
(74) Vertreter: Kruspig, Volkmar

(56) Entgegenhaltungen:
- EP-A1- 0 309 126
- CN-A- 103 073 027
- US-A- 4 748 815
- US-A1- 2010 296 995

## Beschreibung

Die vorliegende Erfindung betrifft ein Verfahren zur Herstellung von Alkalimetallcyaniden als Feststoff. Ferner offenbart sind nach diesem Verfahren hergestellte Alkalimetallcyanide.

Alkalimetallcyanide haben zahlreiche Anwendungen. Ein besonderes wichtiges Anwendungsgebiet ist der Einsatz zur Gewinnung von Gold, Silber und anderen Metallen in der Cyanidlaugerei. Andere Anwendungsgebiete sind die Galvanotechnik sowie das Härten von Stahl. Auch als Ausgangsstoff in der chemischen Synthese finden Alkalimetallcyanide zahlreiche Anwendungen. Ein Beispiel ist hier der Einsatz zur Synthese von Nitrilen, die vielfältige Anwendung in der chemischen Industrie findet. Ein technisch besonders wichtiges Alkalimetallcyanid ist das Natriumcyanid.

Ein wichtiges Verfahren zur Herstellung von Alkalimetallcyaniden nutzt die Reaktion von Cyanwasserstoff HCN (Blausäure) mit Alkalimetallhydroxiden. Zur industriellen Herstellung von HCN als Ausgangssubstanz für diese Synthese von Alkalimetallcyaniden sind im Stand der Technik eine Reihe von Verfahren beschrieben. Ein besonders häufig eingesetztes Verfahren ist das sogenannte Andrussow-Verfahren. Beim Andrussow-Verfahren erfolgt die Herstellung von HCN durch katalysierte Reaktion von Methan, Ammoniak und Luftsauerstoff. Typischerweise wird dabei ein Gemisch von Ammoniak und Methan an Platin-Netzen unter Einblasen von reinem Sauerstoff bei hohen Temperaturen zur Reaktion gebracht. Das durch das Andrussow-Verfahren hergestellte unmittelbare Synthese Produkt stellt dabei eine Mischung von mehreren Komponenten dar, wobei neben dem erwünschten Reaktionsprodukt HCN insbesondere unreagierter Ammoniak, Wasserstoff, Stickstoff und Kohlenoxide vorliegen.

Ein großes Problem bei den bisherigen Verfahren zur Herstellung von Alkalimetallcyaniden ist die Entsorgung der stets anfallenden cyanidhaltigen Abgase und Abwässer. Nach den bisherigen Verfahren war es stets nötig, einen erheblichen Anteil der entstehenden cyanidhaltigen Abwässer einer aufwendigen Aufarbeitung zu unterziehen. Auch die Entgiftung der cyanidhaltigen Abgase führt immer wieder zu Problemen.

Gemäß dem im Stand der Technik beschriebenen Verfahren zur Herstellung von Alkalimetallcyaniden wird in der Regel so vorgegangen, dass das HCN-haltige Reaktionsgas nach der Reaktion durch Abkühlen verflüssigt und anschließend die Blausäure aufgereinigt wird. Hierzu sind aufwendige Reinigungsverfahren, wie beispielsweise eine Rektifikation, notwendig. Die so aufgereinigte flüssige Blausäure wird dann gemäß diesem Verfahren aus dem Stand der Technik mit Alkalimetallhydroxid, typischerweise Natriumhydroxid, zur Reaktion gebracht, um Natriumcyanid zu erhalten. Wenn das Natriumcyanid als Feststoff hergestellt werden soll, so muss in einem weiteren Schritt eine Kristallisation erfolgen. Um möglichst wenig cyanidhaltige Abfälle zu erzeugen, kann die Natriumcyanid Mutterlauge nach der Kristallisation in den Reaktionsbehälter, in dem die verflüssigte Blausäure mit Natriumhydroxid zur Reaktion gebracht wird, rückgeführt werden. Diese Vorgehensweise führt jedoch gemäß dem im Stand der Technik beschriebenen Verfahren nicht zu einem geschlossenen Kreislauf, da sich im Verlauf von mehreren Rückführungszyklen Nebenprodukte, wie Beispielsweise Natriumformiat anreichern, sodass nach einer gewissen Zeit die Natriumcyanid Mutterlauge nicht mehr rückgeführt werden kann. Die so durch Nebenprodukte verunreinigte Natriumcyanid Mutterlauge muss dann kostenaufwendig und umweltbelastend entsorgt werden.

Diese Entsorgung ist besonders aufwendig, da Natriumcyanid und andere Alkalimetallcyanide hochgiftig sind. In der Regel erfolgt die Entsorgung durch Zugabe von Wasserstoffperoxid, wobei das Natriumcyanid zu Natriumcyanat oxidiert wird. Unter Umständen sind noch weitere Schritte erforderlich, bevor eine endgültige Entsorgung der entgifteten Abwässer erfolgen kann. Dies führt zu einem hohen Kostenaufwand.

Es sind auch alternative Ausführungsformen im Stand der Technik beschrieben, bei denen das Andrussow-Reaktionsgas als solches mit einer Natriumhydroxidlösung zur Reaktion gebracht wird um Natriumcyanid herzustellen. Diese Prozessführung ist bislang nur in wenigen Fällen verwirklicht worden und wurde bislang vorwiegend verwendet, um die Natriumcyanidlösung, die aus der Reaktion des blausäurehaltigen Gases mit dem Natriumhydroxid entsteht als Endprodukt direkt zu vertreiben. Eine Verfahrensführung, bei der das Andrussow-Reaktionsgas in der Gasphase mit Natriumhydroxid zur Reaktion gebracht wird und als Endprodukt festes Natriumcyanid erzeugt wurde, wurde bisher eher selten verwirklicht. Der Grund dafür, dass eine solche Reaktionsführung bislang im Stand der Technik eher selten verwirklicht wurde, ist vor allem in der Schwierigkeit im Hinblick auf die Verunreinigung der Natriumcyanid Mutterlauge zu sehen. Durch die direkte Reaktion des Andrussow-Reaktionsgases in der Gasphase mit dem Natriumhydroxid entstehen zahlreiche Nebenprodukte, die sich bei der Kristallisation des Natriumcyanids entweder als Verunreinigung mit abscheiden oder aber als Verunreinigung in der Natriumcyanid Mutterlauge verbleiben. Diese Verunreinigungen, die in der Natriumcyanid Mutterlauge verbleiben, führen dazu, dass eine Rückführung der Natriumcyanid Mutterlauge nur in äußerst begrenztem Umfang möglich ist, da eine solche Rückführung zu der immer weiteren Anreicherung der Nebenprodukte führen würde. Besonders störend sind die Nebenprodukte Natriumformiat und Natriumcarbonat, die sich bei einer solchen Rückführung immer stärker anreichern. Dies würde eine ständige Entsorgung der Natriumcyanid Mutterlauge notwendig machen, was zu einer geringen Ausbeute des Prozesses, zu hohen Kosten und zu einer nicht-vertretbaren Umweltbelastung führen würde.

Die EP 0 309 126 A1 offenbart ein Verfahren zur Herstellung wasserfreier Natriumcyanidkristalle.

Vor diesem Hintergrund lag der vorliegenden Erfindung die Aufgabe zugrunde, ein Verfahren zur Herstellung von Alkalimetallcyaniden als Feststoff bereitzustellen, das die oben geschilderten Nachteile vermeidet.

Insbesondere lag der vorliegenden Erfindung die Aufgabe zugrunde, ein Verfahren zu Herstellung von Alkalimetallcyaniden bereitzustellen, dass die Herstellung von Alkalimetallcyaniden als Feststoffe in möglichst wenigen Verfahrensschritten erlaubt, und gleichzeitig möglichst wenige Abgase und Abwässer, insbesondere in

Form von cyanidhaltigen Abgasen und Abwässern, erzeugt, die aufwändig entsorgt werden müssten.

Darüber hinaus lag der vorliegenden Erfindung die Aufgabe zu Grunde, ein Verfahren zur Herstellung von Alkalimetallcyaniden bereitzustellen, das möglichst effizient durchgeführt werden kann und möglichst wenige Abgase und Abwässer erzeugt, insbesondere in Form von cyanidhaltigen Abgasen und Abwässern, und gleichzeitig unabhängig von den am Anlagenstandort herrschenden Außentemperaturen durchgeführt werden kann.

Um dieses Problem zu lösen, wird erfindungsgemäß ein Verfahren zur Herstellung von Alkalimetallcyanid als Feststoff vorgeschlagen, das mindestens die folgenden Schritte aufweist:
i) einen Absorptionsschritt in Form einer Absorption von Cyanwasserstoff aus einem cyanwasserstoffhaltigem Synthesegases in einer wässrigen Alkalimetallhydroxidlösung zur Herstellung einer wässrigen Alkalimetallcyanidlösung;
iii) einen Kristallisationsschritt in Form des Einbringens der Alkalimetallcyanidlösung in einen evaporativen Kristallisator, der durch Beheizung, insbesondere durch Dampfbeheizung beheizt wird, und in dem ein Druck unterhalb des Atmosphärendrucks (unterhalb 1013 mbar) vorliegt;
iv) einen Schritt der Kondensation der in Schritt iii) anfallenden cyanidhaltigen Brüden zu einem cyanidhaltigen Brüdenkondensat, wobei der Schritt der Kondensation iv) unter Einsatz eines mehrstufigen Dampfstrahlverdichters erfolgt, der die Brüdendämpfe aus dem Kristallisator absaugt.

Durch den Einsatz eines Dampfstrahlverdichters, der die Brüdendämpfe aus dem Kristallisator absaugt, wird es möglich, den Kondensationsschritt unabhängig von der Außentemperatur zu machen.

Besonders bevorzugt ist es, diese Vorgehensweise unter Einsatz eines Dampfstrahlverdichters zur Kondensation der in Schritt iii) anfallenden cyanidhaltigen Brüden mit einer Kombination aus einem Aufbereitungsschritt ii) und einem Rückführungsschritt v) zu kombinieren.

In einer besonders bevorzugten Ausführungsform ist das erfindungsgemäße Verfahren daher so ausgeprägt, dass es die folgenden Schritte umfasst:
i) einen Absorptionsschritt in Form einer Absorption von Cyanwasserstoff aus einem cyanwasserstoffhaltigem Synthesegases in einer wässrigen Alkalimetallhydroxidlösung zur Herstellung einer wässrigen Alkalimetallcyanidlösung;
ii) einen Schritt der Aufbereitung der in Schritt i) angefallenen cyanidhaltigen Abgase, wobei
   iia) in einem ersten Verbrennungsschritt die in Schritt i) angefallenen cyanidhaltigen Abgase einer unterstöchiometrischen Verbrennung (Sauerstoffanteil in der Brennkammer kleiner als stöchiometrisch erforderlich) unterzogen werden;
   iib) in einem Kühlschritt das in Schritt iia) erhaltene Reaktionsgemisch durch Einbringen einer wässrigen Flüssigkeit gekühlt wird;
   iic) in einem zweiten Verbrennungsschritt das in Schritt iib) erhaltene Reaktionsgemisch durch Zufuhr von weiterem Sauerstoff unter überstöchiometrischen Bedingungen (Sauerstoffanteil in der Brennkammer größer als stöchiometrisch erforderlich) verbrannt wird;
iii) einen Kristallisationsschritt in Form des Einbringens der Alkalimetallcyanidlösung in einen evaporativen Kristallisator, der durch Beheizung, insbesondere durch Dampfbeheizung beheizt wird, und in dem ein Druck unterhalb des Atmosphärendrucks (unterhalb 1013 mbar) vorliegt;
iv) einen Schritt der Kondensation der in Schritt iii) anfallenden cyanidhaltigen Brüden zu einem cyanidhaltigen Brüdenkondensat, wobei der Schritt der Kondensation iv) unter Einsatz eines mehrstufigen Dampfstrahlverdichters erfolgt, der die Brüdendämpfe aus dem Kristallisator absaugt.
v) einen Schritt der Rückführung, bei dem das in Schritt iv) gewonnene cyanidhaltige Brüdenkondensat als wässrige Flüssigkeit in Schritt iib) eingesetzt wird.

Hier entsteht eine synergistische Zusammenwirkung der Verfahrensführung, da durch den Einsatz eines Dampfstrahlverdichters in Schritt iv) besonders effizient und unabhängig von der Außentemperatur das cyanidhaltige Brüdenkondensat aus dem Kristallisationsschritt iii) entfernt werden kann und gleichzeitig zusammen mit dem in Schritt i) anfallenden cyanwasserstoffhaltigen Abgas im Schritt ii) verbrannt werden kann, wobei das in Schritt iv) gewonnene Brüdenkondensat gleichzeitig als wässrige Flüssigkeit im Kühlschritt iib) zum Einsatz kommt.

Besonders gute Ergebnisse werden erzielt, wenn der Dampfstrahlverdichter so eingesetzt wird, dass das Kompressionsverhältnis über alle Stufen bei etwa 1:33 bis 1:10, insbesondere etwa 1:16 bis 1:15, besonders bevorzugt etwa 1:15,5 liegt.

Besonders vorteilhaft wird das Verfahren so durchgeführt, dass die Schritte ii) und iv) in Bezug auf das in Schritt iv) gewonnene cyanidhaltige Brüdenkondensat einen geschlossenen Kreislauf darstellen, bei dem kein cyanidhaltiges Brüdenkondensat verworfen werden muss.

In einer besonders bevorzugten Ausführungsform umfasst das erfindungsgemäße Verfahren noch mindestens einen der folgenden Schritte:
iiib) einen Trennschritt in Form der Abtrennung der gebildeten Alkalimetallcyanidkristalle aus der Mutterlauge, insbesondere durch Zentrifugieren;
iiic) einen Rückführungsschritt in Form der Rückführung von etwa X Vol-% der in Schritt iiib) abgetrennten Mutterlauge in die Absorption mit gemäß Schritt i) und der Rückführung von (100-X) Vol-% der in Schritt iiib) abgetrennten Mutterlauge in die Kristallisation gemäß Schritt iii);
iiid) einen Trockenschritt in Form des Trocknens der in Schritt iiib) abgetrennten Alkalimetallcyanidkristalle;
iiie) einen Zerkleinerungsschritt in Form der Zerkleinerung des in Schritt iiid) erhaltenen Alkalimetallcyanidkristallstromes.

Der Trennschritt iiib) dient dabei dazu, die im Kristallisationsschritt erhaltenen Alkalimetallcyanidkristalle von der Mutterlauge abzutrennen. In einer besonders bevorzugten Ausführungsform erfolgt dieses Abtrennen durch ein oder mehreren Zentrifugen, insbesondere in Form von Schälzentrifugen.

Der Rückführungsschritt iiic) ermöglicht die vollständige Rückführung der im Trennschritt iiib) abgetrennten alkalimetallcyanid-haltigen Mutterlauge in den Prozess. Dabei wird der eine Teil von X Vol-% der in Schritt iiib) abgetrennten Mutterlauge in die Absorption zurückgeführt und der andere Teil (100-X) Vol-% der abgetrennten Mutterlauge in die Kristallisation zurückgeführt.

Insgesamt erfolgt also gemäß dieser Ausführungsform eine vollständige Rückführung der im Trennschritt iiib) abgetrennten Mutterlauge, wobei der Anteil X Vol-% in den Absorptionsschritt i) rückgeführt wird und der verbleibende Anteil (100 - X) Vol-% in den Kristallisationsschritt iii) rückgeführt wird. Überraschend hat sich gezeigt, dass durch diese geteilte Art der Rückführung der in Schritt iiib) erhaltenen Mutterlauge, im synergistischen Zusammenwirken mit weiteren Merkmalen des erfindungsgemäßen Verfahrens, ein vollständig geschlossener Kreislauf erreicht werden kann, bei dem keine alkalimetallcyanidhaltige Mutterlauge entsorgt werden muss.

Von besonderer Bedeutung ist dabei die erfindungsgemäße Einstellung der Parameter im Kristallisationsschritt iii).

Grundsätzlich gilt dabei, dass durch steigende Temperatur während des Kristallisationsschrittes im evaporativem Kristallisator die Bildung von Nebenprodukten, insbesondere in Form von Alkalimetallformiaten begünstigt wird. Unter diesem Gesichtspunkt sollte also möglichst kalt gearbeitet werden. Problematisch ist hier jedoch, dass sich bei tiefen Temperaturen sehr kleine Alkalimetallcyanidkristalle bilden, die im Trennschritt iiib) nur sehr schwer abtrennbar sind. Durch das erfindungsgemäße Zusammenspiel der Beheizung im Kristallisationsschritt durch Dampfbeheizung in der Art, dass an der Kontaktfläche des Heizelementes zu der Alkalimetallcyanidlösung eine Temperatur von etwa 60 - 100°C, vorzugsweise etwa 70 - 90°C vorliegt mit einer Vakuumerzeugung im Kristallisationsschritt, sodass ein Druck von etwa 30 - 100 mbar, vorzugsweise 60 - 65mbar vorliegt, gelingt es, die Bildung von Nebenprodukten insbesondere in Form von Formiaten hinreichend zu unterdrücken und gleichzeitig gute Kristallgrößen zu erreichen.

Die Aufheizung der Kristallisationslösung in Schritt iii) erfolgt dabei typischerweise durch einen Rohrbündelwärmetauscher, der auf der Mantelseite mit Dampf beheizt ist. Dabei wird vorzugsweise Vakuumdampf eingesetzt, sodass Temperaturen von etwa 70 - 100°C, typischerweise etwa 70 - 90°C erreicht werden. Durch diese niedrigen Temperaturen kann die Bildung von Nebenprodukten, insbesondere in Form von Formiaten, weitgehend unterdrückt werden.

Durch das Zusammenspiel dieser Verfahrensparameter in Bezug auf die Beheizung mit der Vakuumerzeugung bei der ein Druck von etwa 30 - 100 mbar, vorzugsweise etwa 60 - 65 mbar vorliegt, werden auf der einen Seite hinreichende Kristallgrößen erreicht. Gewünscht sind Kristallgrößen von etwa 100 - 120 µm. Dadurch wird ein nahezu vollständiges Abtrennen der auskristallisierten Alkalimetallcyanide aus der Kristallisationslösung möglich.

Gleichzeitig kann die Bildung von Nebenprodukten, insbesondere in Form von Formiaten, so weitgehend unterdrückt werden, dass im Zusammenspiel mit der erfindungsgemäßen Vorgehensweise der teilweisen Rückführung der in Schritt iiib) abgetrennten Mutterlauge in die Absorption (Schritt i)) und Rückführung des verbleibenden Teil der Mutterlauge in die Kristallisation (Schritt iii)) es so erstmals möglich wird, einen geschlossenen Kreislauf der Alkalimetallcyanidlösung herzustellen. Das erfindungsgemäße Verfahren ermöglicht gemäß diesem Aspekt somit die Herstellung von Alkalimetallcyanid als Feststoff in guter Qualität mit nur geringen Verunreinigungen, wobei gleichzeitig keine alkalimetallcyanidhaltigen Abwässer entstehen, die kostenaufwendig und umweltbelastend entsorgt werden müssten.

Der Trockenschritt iiid) dient dem Trocknen der in Schritt iiib) abgetrennten Alkalimetallcyanidkristalle. Dabei können verschiedene Trocknungstechniken zum Einsatz kommen.

Der Zerkleinerungsschritt iiie) dient der Zerkleinerung von Kompaktierungen des Alkalimetallcyanidkristallstromes. Eine solche Zerkleinerung von Kompaktierungen ist sinnvoll, da sie eine anschließende Brickettierung des Produktes stark erleichtert.

In einer bevorzugten Ausführungsform wird das erfindungsgemäße Verfahren so durchgeführt, dass nach Schritt iii) ein weiterer Schritt iiib) in Form eines Trennschrittes in Form der Abtrennung der gebildeten Alkalimetallcyanidkristalle aus der Mutterlauge durch Zentrifugieren, insbesondere mittels diskontinuierlich arbeitenden Schälzentrifugen erfolgt.

Besonders bevorzugt wird das Verfahren so durchgeführt, dass nach dem Trennschritt iiib) ein weiterer Schritt iiic) als Rückführungsschritt in Form der Rückführung von etwa X Vol% der im Schritt iiib) abgetrennten Mutterlauge in die Adsorption gemäß Schritt i) und der Rückführung von etwa (100-X) Vol-% der in Schritt iiib) abgetrennten Mutterlage in die Kristallisation gemäß Schritt iii) erfolgt.

Durch diesen erfindungsgemäßen Schritt der teilweisen Rückführung der Alkalicyanid-Mutterlauge in den Adsorptionsprozess und gleichzeitig der teilweisen Rückführung des verbleibenden Anteils der in Trennschritt iii) abgetrennten Mutterlauge in die Kristallisation wird auch in Bezug auf die abgetrennte Mutterlauge ein geschlossener Kreislauf erzielt.

Insgesamt erfolgt also eine vollständige Rückführung der im Trennschritt iiib) abgetrennten Mutterlauge, wobei der Anteil X Vol-% in den Absorptionsschritt i) rückgeführt wird und der verbleibende Anteil (100 - X) Vol-% in den Kristallisationsschritt iii) rückgeführt wird. Überraschend hat sich gezeigt, dass durch diese geteilte Art der Rückführung der in Schritt iiib) erhaltenen Mutterlauge, im synergistischen Zusammenwirken mit weiteren Merkmalen des erfindungsgemäßen Verfahrens, ein vollständig geschlossener Kreislauf erreicht werden kann, bei dem keine alkalimetallcyanidhaltige Mutterlauge entsorgt werden muss.

Von besonderer Bedeutung ist dabei das erfindungsgemäß bevorzugte Zusammenspiel der Durchführung des Kristallisationsschritts iii) mit dem besonderen Parameter in Bezug auf Temperatur der Dampfbeheizung und des im evaporativen Kristallisator vorliegenden Druckes mit der erfindungsgemäßen Vorgehensweise der teilweisen Rückführung der in Schritt iiib) abgetrennten Mutterlauge in die Adsorption (Schritt i) und Rückführung des verbleibenden Teils der Mutterlauge in die Kristallisation (Schritt iii)). Durch diese Vorgehensweise wird es erstmals möglich, einen geschlossenen Kreislauf der Alkalimetallcyanidlösung herzustellen. Das erfindungsgemäße Verfahren ermöglicht somit die Herstellung von Alkalimetallcyanid als Feststoff in guter Qualität mit nur geringen Verunreinigungen, wobei gleichzeitig keine alkalimetallcyanidhaltigen Abwässer entstehen, die kostenaufwendig und umweltbelastend entsorgt werden müssten.

Gleichzeitig ermöglicht das erfindungsgemäß bevorzugte Zusammenspiel des Aufbereitungsschrittes ii) mit dem Schritt der Gewinnung des cyanidhaltigen Brüdenkondensates iv), insbesondere in Zusammenspiel mit dem Einsatz eines mehrstufigen Dampfstrahlverdichters, einen geschlossenen Kreislauf im Hinblick auf die cyanidhaltigen Abgase.

Um eine Verfahrensführung zu ermöglichen, die das Alkalimetallcyanid als Feststoff in möglichst hoher Ausbeute und möglichst hoher Reinheit zugänglich macht, wird in Schritt i) vorzugsweise das Alkalimetallhydroxid kontinuierlich gemessen und geregelt, damit immer die optimale Konzentration des Alkalimetallhydroxids vorliegt. Durch diese kontinuierliche Messung und Regelung ist es möglich, dem Gehalt an freiem Alkalimetallhydroxid in der Lösung stets im gewünschten Bereich von etwa 2 - 10 Gew.-% zu halten.

In einer bevorzugten Ausführungsform erfolgt der Trockenschritt iiid) des Trocknens der in Schritt iiib) abgetrennten Alkalimetallcyanidkristalle so, dass die Trocknung in einem Kontakttrockner mit Zwangsumwälzung bei einer Temperatur des Heizmediums von etwa 180 - 400°C, vorzugsweise etwa 185 - 250°C erfolgt.

Besonders gute Ergebnisse werden dabei erzielt, wenn die in Schritt iiib) abgetrennten Alkalimetallcyanidkristalle vor dem Trockenschritt iiid) einen vorgeschalteten Vorheizer durchlaufen und dabei gleichzeitig eine Vergleichmäßigung des diskontinuierlichen Produktstromes zwischen den Zentrifugen und dem Kontakttrockner erreicht wird.

Das Zusammenspiel von Trockner und Vorheizer wird dabei vorzugsweise so gestaltet, dass Trockner und Vorheizer mit einem vorgewärmten Luftstrom dergestalt gespült werden, dass eine gezielte Luftführung von außen nach innen und von trocken nach feucht erfolgt.

Ein weiterer besonderer Vorteil des erfindungsgemäßen Verfahrens besteht darin, dass in Schritt i) ein cyanidwasserstoffhaltiges Synthesegas eingesetzt werden kann, zu dessen Herstellung Erdgas mit einem Methangehalt von < etwa 98 Ma% ohne besondere Vorreinigung für den Andrussow-Prozess eingesetzt werden kann. Auch das Reaktionsprodukt des Andrussow-Prozesses aus einem so eingesetzten Erdgas mit einem Methangehalt von < etwa 98 Ma% erzeugt wurde, kann ohne Zwischenreinigungsschritte unmittelbar zur Absorption in Schritt i) eingesetzt werden.

In einer bevorzugten Ausführungsform des erfindungsgemäßen Verfahrens folgt dem Schritt iiid) ein weiterer Schritt iiie) in Form eines Zerkleinerungsschrittes, wobei zur Zerkleinerung von Kompaktierungen des Alkalimetallcyanidkristallstromes aus Schritt iiid) eine Einstellung der maximalen Größe von etwa 10 mm zur Optimierung der nachfolgenden Brikettierung erfolgt.

Die vorliegende Offenbarung betrifft auch ein Alkalimetallcyanid, insbesondere in Form von Natriumcyanid, das nach dem erfindungsgemäßen Verfahren hergestellt ist.

Das erfindungsgemäße Verfahren weist gegenüber den bisherigen Verfahren zur Herstellung von Alkalimetallcyaniden zahlreiche Vorteile auf. Durch das synergistische Zusammenwirken der Verfahrensparameter wird es einerseits möglich, einen geschlossenen Kreislauf im Hinblick auf die im Verfahren anfallenden cyanidhaltigen Brüden zu erreichen. Dies geschieht in besonders effizienter Art und Weise, da die während der Kristallisation anfallenden cyanidhaltigen Brüden gemeinsam mit dem im Absorptionsprozess anfallenden cyanidhaltigen Abgasen entsorgt werden können und gleichzeitig als Kühlflüssigkeit dienen. Auch im Hinblick auf die in der Kristallisation anfallende cyanidhaltige Mutterlauge kann durch die erfindungsgemäße Verfahrensführung ein geschlossener Kreislauf erreicht werden. Gleichzeitig wird es durch das erfindungsgemäße Verfahren möglich, dass cyanwasserstoffhaltiges Synthesegas ohne jeden Kondensations- und Aufreinigungsschritt direkt mit der Alkalimetallhydroxyd-Lösung zur Reaktion zu bringen. Dies führt zu einer wesentlich einfacheren Verfahrensführung und zum Einsparen von Kosten.

## Patentansprüche

1. Verfahren zur Herstellung von Alkalimetallcyaniden als Feststoff, umfassend mindestens die Schritte:
i) einen Absorptionsschritt in Form einer Absorption von Cyanwasserstoff aus einem cyanwasserstoffhaltigem Synthesegases in einer wässrigen Alkalimetallhydroxidlösung zur Herstellung einer wässrigen Alkalimetallcyanidlösung;
iii) einen Kristallisationsschritt in Form des Einbringens der Alkalimetallcyanidlösung in einen evaporativen Kristallisator, der durch Beheizung, insbesondere durch Dampfbeheizung beheizt wird, und in dem ein Druck unterhalb des Atmosphärendrucks (unterhalb 1013 mbar) vorliegt;
iv) einen Schritt der Kondensation der in Schritt iii) anfallenden cyanidhaltigen Brüden zu einem cyanidhaltigen Brüdenkondensat, wobei der Schritt der Kondensation iv) unter Einsatz eines mehrstufigen Dampfstrahlverdichters erfolgt, der die Brüdendämpfe aus dem Kristallisator absaugt.

2. Verfahren nach Anspruch1, **dadurch gekennzeichnet, dass** das Verfahren die folgenden zusätzlichen Schritte umfasst:
ii) einen Schritt der Aufbereitung der in Schritt i) angefallenen cyanidhaltigen Abgase, wobei
iia) in einem ersten Verbrennungsschritt die in Schritt i) angefallenen cyanidhaltigen Abgase einer unterstöchiometrischen Verbrennung (Sauerstoffanteil in der Brennkammer kleiner als stöchiometrisch erforderlich) unterzogen werden;
iib) in einem Kühlschritt das in Schritt iia) erhaltene Reaktionsgemisch durch Einbringen einer wässrigen Flüssigkeit gekühlt wird;
iic) in einem zweiten Verbrennungsschritt das in Schritt iib) erhaltene Reaktionsgemisch durch Zufuhr von weiterem Sauerstoff oder Luft unter überstöchiometrischen Bedingungen (Sauerstoffanteil in der Brennkammer größer als stöchiometrisch erforderlich) verbrannt wird;
v) einen Schritt der Rückführung, bei dem das in Schritt iv) gewonnene cyanidhaltige Brüdenkondensat als wässrige Flüssigkeit in Schritt iib) eingesetzt wird.

3. Verfahren nach Anspruch 1 oder 2, **dadurch gekennzeichnet, dass** der Dampfstrahlverdichter so eingesetzt wird, dass das Kompressionsverhältnis über alle Stufen bei 1:33 bis 1:10, insbesondere 1:16 bis 1:15, besonders bevorzugt 1:15,5 liegt.

4. Verfahren nach mindestens einem der Ansprüche 1 bis 3, **dadurch gekennzeichnet, dass** die Schritte ii) und iv) in Bezug auf das in Schritt iv) gewonnene cyanidhaltige Brüdenkondensat einen geschlossenen Kreislauf darstellen, bei dem kein cyanidhaltiges Brüdenkondensat verworfen werden muss.

5. Verfahren nach mindestens einem der vorhergehenden Ansprüche, **dadurch gekennzeichnet, dass** nach Schritt iii) ein weiterer Schritt iiib) in Form eines Trennschrittes in Form der Abtrennung der gebildeten Alkalimetallcyanidkristalle aus der Mutterlauge durch Zentrifugieren, insbesondere mittels diskontinuierlich arbeitenden Schälzentrifugen erfolgt.

6. Verfahren nach Anspruch 5, **dadurch gekennzeichnet, dass** nach dem Trennschritt iiib) ein weiterer Schritt iiic) als Rückführungsschritt in Form der Rückführung von etwa X Vol% der im Schritt iiib) abgetrennten Mutterlauge in die Absorption gemäß Schritt i) und der Rückführung von etwa (100-X) Vol-% der in Schritt iiib) abgetrennten Mutterlage in die Kristallisation gemäß Schritt iii) erfolgt.

7. Verfahren nach mindestens einem der Ansprüche 5 bis 6, **dadurch gekennzeichnet, dass** nach dem Trennschritt iiib) ein weiterer Schritt iiid) als Trockenschritt in Form des Trocknens der in Schritt iiib) abgetrennten Alkalimetallcyanidkristallen erfolgt, wobei der Trockenschritt insbesondere so ausgebildet ist, dass die abgetrennten Alkalimetallcyanidkristalle mittels eines nachgeschalteten Kontakttrockners getrocknet werden und der Trocknungsgrad der Alkalimetallcyanidkristalle von Charge zu Charge individuell eingestellt werden kann.

8. Verfahren nach mindestens einem der Ansprüche 5 bis 7, **dadurch gekennzeichnet, dass** die in Schritt iiib) gebildeten Alkalimetallcyanidkristalle eine Korngrößenverteilungen mit Kristallgrößen d50 von 50 - 200, insbesondere 100 - 120 µm aufweisen.

9. Verfahren nach mindestens einem der Ansprüche 5 bis 8, **dadurch gekennzeichnet, dass** die Schritte i), iii), iiib) und iiic) in Bezug auf die in Schritt iiib) abgetrennte Mutterlauge einen geschlossenen Kreislauf darstellen, bei dem keine alkalimetallcyanidhaltige Mutterlauge verworfen werden muss.

10. Verfahren nach mindestens einem der Ansprüche 5 bis 9, **dadurch gekennzeichnet, dass** die in Schritt iiib) abgetrennten Alkalimetallcyanidkristalle in einem Schritt iiid) getrocknet werden, wobei die Trocknung in einem Kontakttrockner mit Zwangsumwälzung bei einer Temperatur des Heizmediums von 180 bis 400°C, vorzugsweise 185 bis 250°C erfolgt.

## Claims

1. A method for producing alkali metal cyanides as a solid matter, comprising at least the steps:
i) an absorption step in the form of absorbing hydrogen cyanide from a hydrogen cyanide-containing synthesis gas in an aqueous alkali metal hydroxide solution for producing an aqueous alkali metal cyanide solution;
iii) a crystallization step in the form of introducing the alkali metal cyanide solution into an evaporative crystallizer which is heated by heating, in particular by vapor heating, and in which a pressure is below the atmospheric pressure (below 1013 mbar);
iv) a step of condensing the cyanide-containing exhaust vapors arising in step iii) to a cyanide-containing exhaust vapor condensate, wherein the step of condensing iv) is performed using a multi-stage steam jet compressor which extracts the exhaust vapors from the crystallizer.

2. The method according to claim 1, **characterized in that** the method comprises the following additional steps:
ii) a step of processing the cyanide-containing exhaust gases arising in step i), wherein
iia) in a first combustion step, the cyanide-containing exhaust gases are subjected to an under-stoichiometric combustion (the oxygen proportion within the combustion chamber is lower than stoichiometrically necessary);
iib) in a cooling step, the reaction mixture obtained in step iia) is cooled by introducing an aqueous liquid;
iic) in a second combustion step, the reaction mixture obtained in step iib) is burnt by supplying further oxygen or air under over-stoichiometric conditions (the oxygen proportion within the combustion chamber is higher than stoichiometrically necessary);
(v) a step of returning, in which the cyanide-containing exhaust vapor condensate obtained in step iv) is used as the aqueous liquid in step iib).

3. The method according to claim 1 or 2, **characterized in that** the vapor jet compressor is used such that the compression ratio over all stages is at 1:33 to 1:10, in particular at 1:16 to 1:15, particularly preferred at 1:15.5.

4. The method according to at least one of claims 1 to 3, **characterized in that** the steps ii) and iv) relative to the cyanide-containing exhaust vapor condensate obtained in step iv) represent a closed circuit, in which cyanide-containing exhaust vapor condensate does not need to be discarded.

5. The method according to at least one of the preceding claims, **characterized in that** after step iii), a further step iiib) is performed in the form of a separating step in the form of separating the formed alkali metal cyanide crystals from the mother liquor by centrifuging, in particular by means of discontinuously operating scraper centrifuges.

6. The method according to claim 5, **characterized in that** after the step iiib), a further step iiic) is performed as a returning step in the form of returning about X vol-% of the mother liquor separated in step iiib) into the absorption according to step i), and returning about (100 - X) vol-% of the mother liquor separated in step iiib) into the crystallization according to step iii).

7. The method according to at least one of claims 5 to 6, **characterized in that** after the separating step iiib), a further step iiid) is performed as a drying step in the form of drying the alkali metal cyanide crystals separated in step iiib), wherein the drying step is in particular configured such that the separated alkali metal cyanide crystals are dried by means of a downstream contact dryer, and the drying degree of the alkali metal cyanide crystals can be adjusted individually from batch to batch.

8. The method according to at least one of claims 5 to 7, **characterized in that** the alkali metal cyanide crystals formed in step iiib) have grain size distributions with crystal sizes d50 from 50 to 200, in particular from 100 to 120 µm.

9. The method according to at least one of claims 5 to 8, **characterized in that** the steps i), iii), iiib) and iiic) relative to the mother liquor separated in step iiib) represent a closed circuit, in which alkali metal cyanide-containing mother liquor does not need to be discarded.

10. The method according to at least one of claims 5 to 9, **characterized in that** the alkali metal cyanide crystals separated in step iiib) are dried in step iiid), wherein the drying is performed in a contact dryer with a forced circulation at a temperature of the heating medium from 180 to 400°C, preferably from 185 to 250°C.

## Revendications

1. Procédé de préparation de cyanures de métal alcalin sous forme solide, comprenant au moins les étapes suivantes :
i) une étape d'absorption sous la forme d'une absorption de cyanure d'hydrogène à partir d'un gaz de synthèse contenant du cyanure d'hydrogène dans une solution aqueuse d'hydroxyde de métal alcalin pour préparer une solution aqueuse de cyanure de métal alcalin ;
iii) une étape de cristallisation sous la forme de l'introduction de la solution de cyanure de métal alcalin dans un cristallisateur évaporatif qui est chauffé par chauffage, en particulier par chauffage à la vapeur, et dans lequel règne une pression inférieure à la pression atmosphérique (inférieure à 1013 mbar) ;
iv) une étape de condensation des vapeurs contenant du cyanure, résultant de l'étape iii), en un condensat de vapeur contenant du cyanure, l'étape de condensation iv) étant réalisée en utilisant un compresseur à jet de vapeur à plusieurs étages qui extrait les vapeurs hors du cristallisateur.

2. Procédé selon la revendication 1, **caractérisé en ce que** le procédé comprend les étapes supplémentaires suivantes :
ii) une étape de traitement des gaz résiduaires contenant du cyanure résultant de l'étape i), dans laquelle
iia) dans une première étape de combustion, les gaz résiduaires contenant du cyanure résultant de l'étape i) sont soumis à une combustion sous-stœchiométrique (teneur en oxygène dans la chambre de combustion inférieure à celle requise sur le plan stœchiométrique) ;
iib) dans une étape de refroidissement, le mélange réactionnel obtenu à l'étape iia) est refroidi par introduction d'un liquide aqueux ;
iic) dans une seconde étape de combustion, le mélange réactionnel obtenu à l'étape iib) est brûlé par apport d'oxygène ou d'air supplémentaire dans des conditions sur-stœchiométriques (teneur en oxygène dans la chambre de combustion supérieure à celle requise sur le plan stœchiométrique) ;
v) une étape de recyclage dans laquelle le condensat de vapeur contenant du cyanure obtenu à l'étape iv) est utilisé comme liquide aqueux à l'étape iib).

3. Procédé selon la revendication 1 ou 2, **caractérisé en ce que** le compresseur à jet de vapeur est utilisé de telle sorte que le rapport de compression sur tous les étages est de 1:33 à 1:10, en particulier de 1:16 à 1:15, de manière particulièrement préférée de 1:15,5.

4. Procédé selon l'une au moins des revendications 1 à 3, **caractérisé en ce que** les étapes ii) et iv) constituent un circuit fermé par rapport au condensat de vapeur contenant du cyanure obtenu à l'étape iv), dans lequel aucun condensat de vapeur contenant du cyanure ne doit être rejeté.

5. Procédé selon l'une au moins des revendications précédentes, **caractérisé en ce que**, après l'étape iii), une autre étape iiib) sous la forme d'une étape de séparation sous forme de séparation des cristaux de cyanure de métal alcalin formés à partir de la liqueur mère est réalisée par centrifugation, en particulier au moyen de centrifugeuses à racleur à fonctionnement discontinu.

6. Procédé selon la revendication 5, **caractérisé en ce que**, après l'étape de séparation iiib), une autre étape iiic) est réalisée en tant qu'étape de recyclage sous la forme d'un recyclage d'environ X % en volume de la liqueur mère, séparée à l'étape iiib), vers l'absorption selon l'étape i), et d'un recyclage d'environ (100-X) % en volume de la liqueur mère, séparée à l'étape iiib), vers la cristallisation selon l'étape iii).

7. Procédé selon l'une au moins des revendications 5 à 6, **caractérisé en ce que**, après l'étape de séparation iiib), une autre étape iiid) est réalisée en tant qu'étape de séchage sous la forme d'un séchage des cristaux de cyanure de métal alcalin séparés à l'étape iiib), l'étape de séchage étant conçue en particulier de telle sorte que les cristaux de cyanure de métal alcalin séparés sont séchés au moyen d'un séchoir à contact disposé en aval, et que le degré de séchage des cristaux de cyanure de métal alcalin peut être réglé individuellement d'un lot à l'autre.

8. Procédé selon l'une au moins des revendications 5 à 7, **caractérisé en ce que** les cristaux de cyanure de métal alcalin formés à l'étape iiib) présentent une distribution granulométrique avec des tailles de cristaux d50 de 50 - 200, en particulier de 100 - 120 µm.

9. Procédé selon l'une au moins des revendications 5 à 8, **caractérisé en ce que** les étapes i), iii), iiib) et iiic) constituent un circuit fermé par rapport à la liqueur mère séparée à l'étape iiib), dans lequel aucune liqueur mère contenant du cyanure de métal alcalin ne doit être rejetée.

10. Procédé selon l'une au moins des revendications 5 à 9, **caractérisé en ce que** les cristaux de cyanure de métal alcalin séparés à l'étape iiib) sont séchés dans une étape iiid), le séchage étant effectué dans un séchoir à contact à circulation forcée à une température du milieu chauffant de 180 à 400°C, de préférence de 185 à 250°C.
